# EUROPÄISCHE PATENTSCHRIFT

(11) **EP 3 548 876 B1**
(45) Veröffentlichungstag und Bekanntmachung des Hinweises auf die Patenterteilung: **18.08.2021**
(21) Anmeldenummer: 17811887.3
(22) Anmeldetag: 28.11.2017
(51) Int. Cl.: G01N 23/041, G01N 23/046, G01N 23/20025, G01N 23/201

(54) **DUNKELFELDTENSORTOMOGRAPHIEVERFAHREN**
DARK FIELD TENSOR TOMOGRAPHY METHOD
PROCÉDÉ D'IMAGERIE EN TENSEUR DE DIFFUSION EN CHAMP SOMBRE

(30) Priorität: 30.11.2016 DE 102016223797
(43) Veröffentlichungstag der Anmeldung: 09.10.2019
(73) Patentinhaber: Technische Universität München, 80333 München (DE)
(72) Erfinder: SCHAFF, Florian, 3163 Murrumbeena, VIC (AU); PFEIFFER, Franz, 85774 Unterföhring (DE)
(74) Vertreter: Hoefer & Partner Patentanwälte mbB
(86) Internationale Anmeldenummer: PCT/EP2017/080685
(87) Internationale Veröffentlichungsnummer: WO 2018/099914

(56) Entgegenhaltungen:
- WO-A1-2013/166497
- PL-B1- 221 210
- MALECKI A ET AL: "X-ray tensor tomography", EUROPHYSICS LETTERS: A LETTERS JOURNAL EXPLORING THE FRONTIERS OF PHYSICS, INSTITUTE OF PHYSICS PUBLISHING, BRISTOL, FR, Bd. 105, Nr. 3, 21. Februar 2014 (2014-02-21), Seite 38002, XP020256909, ISSN: 0295-5075, DOI: 10.1209/0295-5075/105/38002 [gefunden am 2014-02-21]
- PAUL ZASLANSKY ET AL: "3D variations in human crown dentin tubule orientation: A phase-contrast microtomography study", DENTAL MATERIALS, Bd. 26, Nr. 1, 1. Januar 2010 (2010-01-01) , Seiten e1-e10, XP055461942, AMSTERDAM, NL ISSN: 0109-5641, DOI: 10.1016/j.dental.2009.09.007
- SHARMA Y ET AL: "Six dimensional X-ray Tensor Tomography with a compact laboratory setup", APPLIED PHYSICS LETTERS, A I P PUBLISHING LLC, US, Bd. 109, Nr. 13, 26. September 2016 (2016-09-26), XP012212200, ISSN: 0003-6951, DOI: 10.1063/1.4963649 [gefunden am 2016-09-26]
- BECH M ET AL: "Quantitative x-ray dark-field computed tomography;Quantitative X-ray dark-field computed tomography", PHYSICS IN MEDICINE AND BIOLOGY, INSTITUTE OF PHYSICS PUBLISHING, BRISTOL GB, Bd. 55, Nr. 18, 31. August 2010 (2010-08-31), Seiten 5529-5539, XP020196924, ISSN: 0031-9155, DOI: 10.1088/0031-9155/55/18/017

## Beschreibung

Die Erfindung betrifft ein Röntgen-CT-Verfahren und insbesondere ein registrierungsbasiertes Dunkelfeldtensortomographieverfahren zum Untersuchen einer Probe mittels Röntgenstrahlung.

Bei der Untersuchung von Objekten als Proben mittels Röntgenstrahlen werden häufig so genannte Röntgen-CT-Verfahren eingesetzt. Dabei wird das zu untersuchende Objekt als Probe in einem Probenhalter aufgenommen und zwischen einer Röntgenquelle und einer Detektoranordnung in einen zu Grunde liegenden Strahlengang der Anordnung eingebracht. Die Probe wird von der Röntgenquelle mit Röntgenstrahlung bestrahlt. Unter Drehung der Probe wird während des Bestrahlens der Probe mit der Detektoranordnung das Strahlungsfeld hinter der Probe, also nach Wechselwirkung des Strahlungsfeldes mit dem Probenmaterial, detektiert.

Problematisch bei herkömmlichen Röntgen-CT-Verfahren und -Vorrichtungen ist, dass besonders kleine Strukturen in beliebig großen Proben bisher nicht aufgelöst werden können. Dies liegt unter anderem daran, dass eine etwaige Richtungsabhängigkeit bei der Aufnahme von Streudaten der Probe, zum Beispiel im Sinne von Dunkelfeldsignalen, bei der Rekonstruktion von Strukturen unterhalb des Auflösungsvermögens, welches bei der Auswertung reiner Absorptionsdaten erreicht wird, bisher nicht berücksichtigt werden kann. Ferner sind mögliche Abschattungen des Strahlungsfeldes durch einen verwendeten Probenhalter und der Mangel an Bezugsgenauigkeit der Aufnahmen der Probe im Probenhalter bei gegebenenfalls notwendig werdenden unterschiedlichen Orientierungen und der sich daraus ergebende Mehraufwand bei der Registrierung oder beim Indeckungbringen von Messdaten zu unterschiedlichen Probenorientierungen unerwünscht.

Die Veröffentlichung "X-ray tensor tomography" von Malecki et al. (MALECKI et al. X-ray tensor tomography. EPL (Europhysics Letters), February 2014, Volume 105(3):38002) offenbart ein Verfahren zur Röntgentensortomographie im Sinne einer Röntgencomputertomographie, welches Information über die lokale Mikromorphologie und ihre Ausrichtung in jedem Voxel des rekonstruierten 3D-Tomogramms liefert. Im Gegensatz zu anderen herkömmlichen Röntgen-CT-Verfahren, bei welchen nur ein einziger Skalarwert für jeden Punkt in einem 3D-Bild rekonstruiert wird, soll dieser Ansatz einen vollständigen Streutensor mit mehreren unabhängigen Strukturparametern in jedem Volumenelement liefern. Das vorgestellte Verfahren soll zum Beispiel Faserorientierungen im Subpixelbereich in einer Kohlenstoffverbundprobe visualisieren können, wodurch die Möglichkeit für eine zerstörungsfreie Anwendung demonstriert wird. Bei dieser herkömmlichen Vorgehensweise der Tensortomographie wird die Rotationsachse zu einer jeweiligen Probenorientierung nicht senkrecht ausgerichtet zu vorgesehenen ersten, zweiten und dritten Gitterelementen mit ihren entsprechenden Gleichorientierungen.

Es ist Aufgabe der vorliegenden Erfindung, ein Röntgen-CT-Verfahren anzugeben, bei welchem mit einem besonders hohen Maß an Zuverlässigkeit und bei geringem Aufwand das für eine Untersuchung notwendige Strahlungsfeld auf eine Probe eingestrahlt und mit hoher Genauigkeit in Bezug auf Aufnahmen der Probe zu unterschiedlichen Orientierungen erfasst werden kann, um dadurch Information über Strukturen zu erhalten, die unterhalb des Auflösungsvermögens der Analyse reiner Röntgenabsorptionsdaten liegen.

Die Lösung dieser Aufgabe erfolgt bei einem Röntgen-CT-Verfahren erfindungsgemäß mit den Merkmalen des unabhängigen Patentanspruchs 1. Vorteilhafte Weiterbildungen sind jeweils Gegenstand der abhängigen Ansprüche.

Gemäß einem ersten Aspekt der vorliegenden Erfindung wird ein Röntgen-CT-Verfahren und insbesondere ein registrierungsbasiertes Dunkelfeldtensortomographieverfahren zum Untersuchen einer Probe mittels Röntgenstrahlung geschaffen, bei welchem eine Probe aufeinanderfolgend bei mindestens zwei voneinander verschiedenen festen Orientierungen unter Rotation um eine jeweils feste Rotationsachse mittels Röntgenstrahlung abgetastet wird, bei jeder Orientierung der Probe auf der Grundlage von Dunkelfeldsignalen eine Mehrzahl von Streudatensätzen erfasst wird und die Streudatensätze zu verschiedenen Orientierungen durch Registrierung miteinander zur Deckung gebracht und zu einem eine gegebenenfalls vorliegende Winkelabhängigkeit der Streuung durch die Probe widerspiegelnden gemeinsamen Streudatensatz vereinigt werden. Zusätzlich wird erfindungsgemäß eine jeweilige Rotationsachse zu einer Orientierung der Probe senkrecht oder im Wesentlichen senkrecht ausgerichtet zu gleichorientierten ersten, zweiten und dritten Gitterelementen einer Gitteranordnung zwischen einer Strahlungsquelle und einer Detektoranordnung im Strahlengang einer verwendeten gitterbasierten Interferometeranordnung einer zu Grunde liegenden Röntgen-CT-Vorrichtung.

Es ist somit ein Kernaspekt der vorliegenden Erfindung, durch mehrfaches, also mindestens zweimaliges Abtasten einer gegebenen Probe unter Rotation zu jeweils unterschiedlichen aber festen Rotationsachsen mittels Röntgenstrahlung unter Erfassung und Auswertung von Streusignalen, insbesondere nach dem Dunkelfeldprinzip, die dabei erfassten Streudatensätze zu verschiedenen Orientierungen der Rotationsachse und mithin der Probe durch Registrierung miteinander zur Deckung zu bringen und dadurch einen einzigen und gemeinsamen Streudatensatz zu schaffen, welcher auch die Richtungsabhängigkeit der Streueigenschaften der Probe wiedergibt.

Auf diese Weise ist es erstmals möglich, die die Probe charakterisierende Richtungsabhängigkeit der Streueigenschaften in gewinnbringender Weise zu erfassen und auszuwerten.

Dabei wird für eine jeweilige Orientierung der Rotationsachse über die Dunkelfeldsignale selektiv ein Streudatensatz für die so definierte Orientierung der Probe erfasst. Die Streudatensätze zu verschiedenen Orientierungen werden durch Registrierung miteinander, d.h. durch Indeckungbringen zu einem gemeinsamen Streudatensatz vereint. Dieser spiegelt dann die Richtungsabhängigkeit der Streueigenschaften der Probe wider und liefert eine Auflösung von Strukturen unterhalb des Auflösungsvermögens, das bei der Analyse reiner Absorptionsdaten erzielt werden kann.

Bei einer vorteilhaften Weiterbildung des erfindungsgemäßen Verfahrens wird eine jeweilige Orientierung der Probe definiert wird durch eine Orientierung einer jeweils festen Rotationsachse der Probe, um welche die Probe beim Abtasten mittels der Röntgenstrahlung rotiert wird.

Bei einer anderen Ausgestaltungsform des erfindungsgemäßen Verfahrens wird zur Erzeugung von Streudatensätzen die Probe für mindestens drei unterschiedliche Orientierungen der Rotationsachse abgetastet, wobei die drei Orientierungen der Rotationsachse insbesondere paarweise senkrecht oder im Wesentlichen senkrecht zueinander stehen, insbesondere mit einem jeweils eingeschlossenen Winkel von mindestens 70°, vorzugsweise von mindestens 80°, weiter bevorzugt von mindestens 85°. Im Idealfall sollten bei der Verwendung von drei Orientierungen für die Rotationsachse diese paarweise zueinander senkrecht stehen.

Besonders vorteilhaft ist das erfindungsgemäße Verfahren dann, wenn gemäß einer anderen Weiterbildung zur Erzeugung von Streudatensätzen die Probe für vier unterschiedliche Orientierungen der Rotationsachse abgetastet wird. In diesem Fall kann der zwischen zwei Orientierungen eingeschlossene Winkel großzügiger bemessen sein, d.h. es kommt auf eine strikt senkrechte Ausrichtung zueinander nicht an.

Besonders vorteilhaft gestaltet sich das erfindungsgemäße Verfahren im Zusammenwirken mit einer zu Grunde liegenden Struktur für eine Röntgen-CT-Vorrichtung, indem nämlich eine jeweilige Rotationsachse zu einer Orientierung der Probe senkrecht oder im Wesentlichen senkrecht ausgerichtet ist oder wird zu gleichorientierten ersten, zweiten und dritten Gitterelementen einer Gitteranordnung zwischen einer Strahlungsquelle und einer Detektoranordnung im Strahlengang einer verwendeten gitterbasierten Interferometeranordnung der zu Grunde liegenden Röntgen-CT-Vorrichtung.

Besonders günstige Verhältnisse stellen sich bei einer anderen Ausführungsform des erfindungsgemäßen Verfahrens ein, wenn zum Haltern und zum Einstellen der Orientierung und insbesondere einer jeweiligen Rotationsachse der Probe ein Probenhalter verwendet wird, welcher einen Probenhalterkörper aufweist, der ausgebildet ist, in seinem Inneren die Probe mittelbar oder unmittelbar an einer Innenseite des Probenhalterhohlkörpers - insbesondere lösbar - drehfest mit dem Probenhalterkörper verbunden oder verbindbar aufzunehmen.

Das erfindungsgemäße Verfahren kann durchgeführt werden unter Verwendung eines Probenhalters für eine Röntgen-CT-Vorrichtung und insbesondere für eine registrierungsbasierte Dunkelfeldtensortomographievorrichtung zum Haltern einer mittels eines Röntgen-CT-Verfahrens zu untersuchenden Probe. Der Probenhalter weist einen Probenhalterkörper auf, welcher ausgebildet ist, in seinem Inneren eine jeweilige Probe mittelbar oder unmittelbar an einer Innenseite des Probenhalterhohlkörpers - insbesondere lösbar - drehfest mit dem Probenhalterkörper verbunden oder verbindbar aufzunehmen. Durch diese Maßnahmen ist es möglich, im Zusammenhang mit einer Röntgen-CT-Vorrichtung, insbesondere einer registrierungsbasierten Dunkelfeldtensortomographievorrichtung, und den dabei auszuführenden Abbildungsverfahren eine zu untersuchende Probe im eingestrahlten Strahlungsfeld mit hoher Zuverlässigkeit und mit einfachen Mitteln in verschiedenen Orientierungen angeordnet zu rotieren und mittels Röntgenstrahlen unter Rotation abzutasten. Dieses Vorgehen ist insbesondere im Zusammenhang mit den Auswertetechniken der registrierungsbasierten Dunkelfeldtensortomographie von besonderem Vorteil.

Grundsätzlich kann der Probenhalterkörper jegliche Form aufweisen, welche eine wohl definiert orientierte Aufnahme einer zu untersuchenden Probe in seinem Inneren erlaubt. Dabei sind im Hinblick auf eine möglichst einfache Handhabbarkeit und/oder das notwendige Maß an mechanischer Stabilität besondere materielle und/oder geometrische Ausgestaltungsformen von besonderem Vorteil.

So ist es gemäß einer Weiterbildung des Probenhalters vorgesehen, dass der Probenhalterkörper teilweise oder vollständig als Hohlkörper ausgebildet ist, insbesondere mit den Probenhalterkörper bildenden Kantenelementen und/oder Flächenelementen. Die Ausgestaltung als Hohlkörper bietet die Möglichkeit einer besonders zuverlässigen Befestigung und/oder Orientierung einer zu untersuchenden Probe.

Alternativ oder zusätzlich kann gemäß einer anderen Ausgestaltungsform des Probenhalters der Probenhalterkörper teilweise oder vollständig als Rahmenstruktur ausgebildet sein, insbesondere mit den Probenhalterkörper bildenden Kantenelementen.

In der einfachsten Form kann eine derartige Rahmenstruktur gebildet werden von einem einfachen - insbesondere planaren - Rahmen, zum Beispiel in Form eines Quadrats, Rechtecks, Polygons oder eines Kreis- oder Ellipsenrings.

Aufgrund der geometrischen Verhältnisse im Zusammenhang mit dem verwendeten Strahlungsfeld bieten gleichförmige Ausgestaltungen für den Probenhalterkörper besondere Vorteile.

So ist es gemäß einer anderen Weiterbildung des Probenhalters vorgesehen, dass der Probenhalterkörper eine Form aus der Gruppe von Formen aufweist, die gebildet wird von der Form einer Hohlkugel, eines Hohlellipsoids, eines Archimedischen Körpers und insbesondere eines Würfels, eines Quaders, eines Ikosaeders, eines Kuboktaeders.

Dabei kann als jeweilige Grundform eines Probenhalterkörpers ein Hohlkörper mit einer zumindest im Wesentlichen geschlossenen Oberfläche ausgebildet sein.

Alternativ oder zusätzlich können der Probenhalterkörper und insbesondere sein Hohlkörper aber auch nach Art eines Kanten-, Rahmen- oder Gittermodells ausgebildet sein, d.h. mit rein materiellen Kanten und offenen Flächen.

Um eine wohldefinierte und feststehende Orientierung einer zu untersuchenden Probe innerhalb des Probenhalterhohlkörpers auf einfache Art und Weise zu ermöglichen, ist es bei einer anderen zusätzlichen oder alternativen Ausgestaltungsform des Probenhalters vorgesehen, dass der Probenhalterkörper eine Befestigungsanordnung aufweist, vorzugsweise in seinem Inneren, zur - insbesondere lösbaren - Befestigung einer zu untersuchenden Probe an einer Innenseite des Probenhalterhohlkörpers, vorzugsweise mit einem oder mehreren Befestigungsmitteln, z.B. in Form von Faden- oder Stabsstrukturen und/oder von Klebestellen.

Da der Probenhalterkörper und insbesondere die ihn bildenden Kantenelemente und/oder Flächenelemente aus einem bestimmten Material gebildet sind, werden die entsprechenden materiellen Bestandteile das einlaufende Strahlungsfeld und auch das nach Wechselwirkung mit der Probe auslaufende Strahlungsfeld mehr oder weniger stark beeinflussen.

Im Hinblick auf diese Problematik ist es von besonderem Vorteil, wenn gemäß einer anderen Ausgestaltungsform des Probenhalters ein jeweiliges Kantenelement und/oder ein jeweiliges Flächenelement von einem Material gebildet werden, welches für eine zu verwendende Röntgenstrahlung gleichförmige optische Eigenschaften aufweist und insbesondere gleichförmig transparent ist.

Ferner ist es von Vorteil, wenn der Probenhalter direkt mit einer Rotationseinrichtung ausgebildet ist, und zwar mit einer - insbesondere steuerbar - antreibbaren Drehachse oder Drehwelle, an oder mit welcher der Probenhalterkörper drehfest gekoppelt oder koppelbar ist.

Das erfindungsgemäße Verfahren kann ausgeführt werden mit einer Röntgen-CT-Vorrichtung, insbesondere nach Art einer registrierungsbasierten Dunkelfeldtensortomographievorrichtung, welche eingerichtet ist zum Untersuchen einer Probe mittels eines Röntgen-CT-Verfahrens, insbesondere mittels eines registrierungsbasierten Dunkelfeldtensortomographieverfahrens gemäß dem oben vorgestellten erfindungsgemäßen Verfahren. Die Röntgen-CT-Vorrichtung weist einen Probenhalter zur Aufnahme einer jeweils zu untersuchenden Probe auf.

Bei einer vorteilhaften Weiterbildung der Röntgen-CT-Vorrichtung ist diese als gitterbasierte Interferometeranordnung und mit einer steuerbaren Strahlungsquelle zum Erzeugen und Aussenden primärer Röntgenstrahlung und mit einer Detektoranordnung in räumlichem Abstand zur Strahlungsquelle zum Detektieren über einen Strahlengang durch die Strahlungsquelle ausgesandter Röntgenstrahlung ausgebildet. Dabei ist zwischen der Strahlungsquelle und der Detektoranordnung eine Gitteranordnung mit im Strahlengang zueinander ausgerichteten ersten, zweiten und dritten Gitterelementen ausgebildet. Des Weiteren ist zwischen einem ersten strahlungsquellenseitigen Gitterelement und einem zweiten detektorseitigen Gitterelement im Strahlengang der Probenhalter angeordnet.

Gemäß einem weiteren Aspekt der vorliegenden Erfindung wird auch ein Röntgen-CT-Verfahren und insbesondere ein registrierungsbasiertes Dunkelfeldtensortomographieverfahren zum Untersuchen einer Probe mittels Röntgenstrahlung geschaffen, bei welchem der oben beschriebene Probenhalter und die oben beschriebene Röntgen-CT-Vorrichtung verwendet werden.

Weitere Einzelheiten, Vorteile und Merkmale der vorliegenden Erfindung ergeben sich aus nachfolgender Beschreibung von Ausführungsbeispielen anhand der Zeichnung.
- Figur 1: zeigt in perspektivischer Seitenansicht einer Ausführungsform der Röntgen-CT-Vorrichtung unter Verwendung einer Ausführungsform des Probenhalters.
- Figuren 2 bis 4: zeigen in schematischer Seitenansicht eine Ausführungsform des Probenhalters mit einem hohlkugelförmigen Probenhalterkörper in verschiedenen Orientierungen.
- Figuren 5 bis 7: zeigen in schematischer Seitenansicht eine andere Ausführungsform des Probenhalters mit einer im Probenhalterkörper in verschiedenen Orientierungen angeordneten Probe in zylindrischer Form.
- Figuren 8 bis 10: zeigen in schematischer Seitenansicht andere Ausführungsformen des Probenhalters, jeweils mit einer im Probenhalterkörper angeordneten Probe in zylindrischer Form.
- Figur 11: zeigt in perspektivischer Seitenansicht eine Ausführungsform des Probenhalters in Form eines Kuboktaeder mit darin angeordneter Probe in zylindrischer Form.

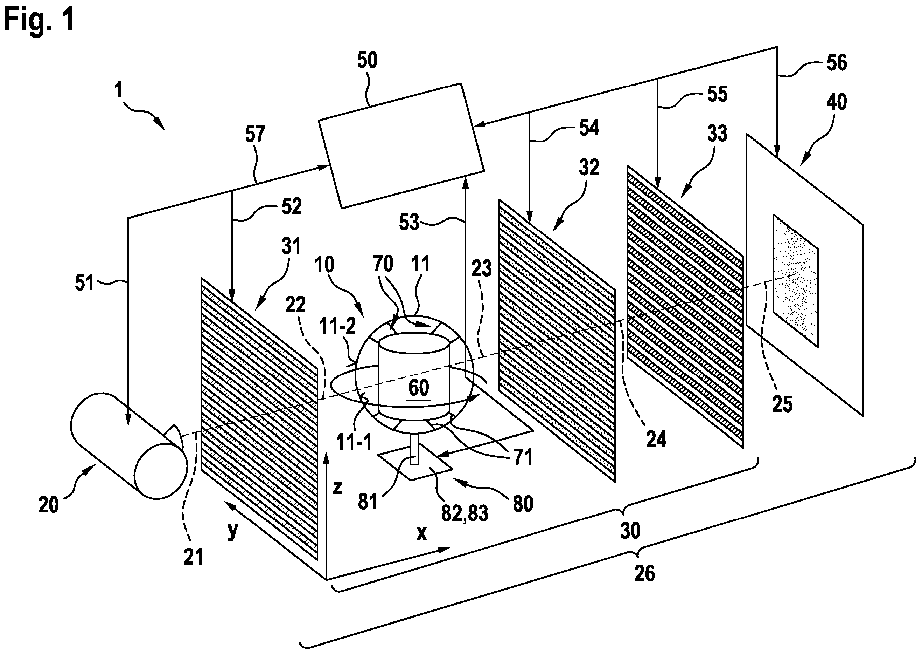

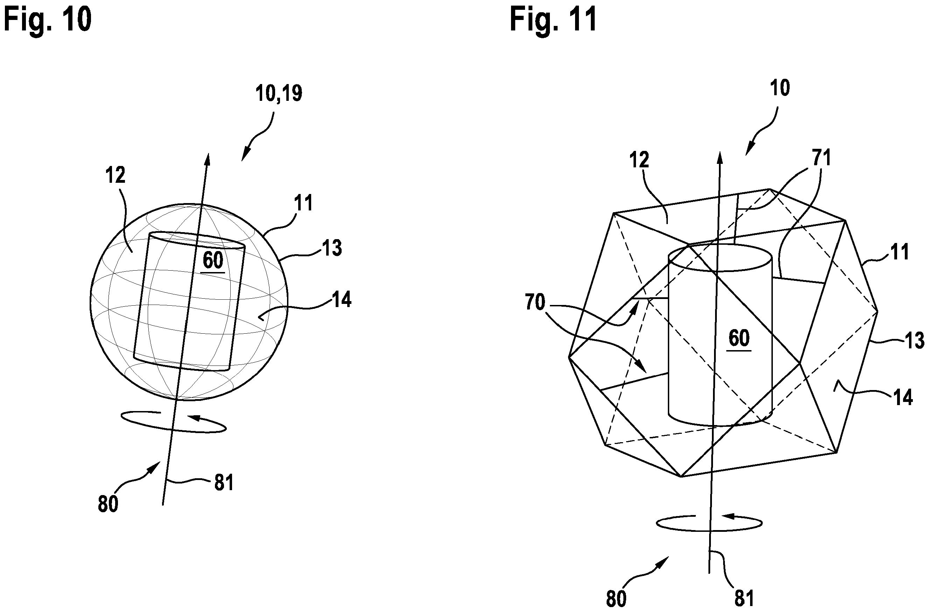

Nachfolgend werden unter Bezugnahme auf die Figuren 1 bis 11 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt in perspektivischer Seitenansicht eine Ausführungsform der Röntgen-CT-Vorrichtung 1 unter Verwendung einer Ausführungsform des Probenhalters 10.

Die Röntgen-CT-Vorrichtung 1 weist eine Röntgenquelle als Strahlungsquelle 20, eine im Strahlengang 26 der Vorrichtung 1 und der Strahlungsquelle 20 gegenüberliegend angeordnete Detektoranordnung 40 sowie im Strahlengang 26 zwischen der Strahlungsquelle 20 und der Detektoranordnung 40 eine Gitteranordnung 30 mit einem ersten Gitterelement 31, einem zweiten Gitterelement 32 und einem dritten Gitterelement 33 auf.

Die Gitterelemente 31, 32, 33 der Gitteranordnung 30 sind eben, parallel zueinander und mit ihren Gitterlinien ebenfalls parallel zueinander im Strahlengang 26 angeordnet.

Konkret bedeutet dies in Figur 1, dass sich der Strahlengang 26 parallel zur x-Richtung erstreckt, dass sämtliche Gitterelemente 31, 32, 33 mit ihren Gitterebenen parallel zur yz-Ebene orientiert sind und dass dabei die Gitterlinien der Gitterelemente 31, 32, 33 parallel zueinander und in Figur 1 parallel zur y-Richtung ausgerichtet sind.

Zwischen dem ersten Gitterelement 31, welches strahlungsquellenseitig positioniert ist, und einem zweiten Gitterelement 32, welches detektorseitig positioniert ist, ist eine Ausführungsform des Probenhalters 10 angeordnet. Alternativ ist eine Anordnung des Probenhalters 10 zwischen dem zweiten Gitterelement 32 und im dritten Gitterelement 33 möglich.

Der Probenhalter 10 besteht aus einem Probenhalterkörper 11, der auf Grund seiner Natur auch als Probenhalterhohlkörper bezeichnet wird. Im Ausführungsbeispiel der Figur 1 besteht der Probenhalterkörper 11 aus einer Hohlkugel mit einer Innenseite oder Innenfläche 11-1 und einer Außenseite oder Außenfläche 11-2. An der Innenseite 11-1 der Hohlkugel als Probenhalterkörper 11 ist über Befestigungsmittel 71 einer Befestigungseinrichtung 70 ein Objekt, hier nach Art eines Zylinders, als Probe 60 an der Innenseite 11-1 angebracht, so dass die Probe 60 mit dem Probenhalterkörper 11 drehfest verbunden ist.

Neben dem Probenhalterkörper 11 weist der Probenhalter 10 eine Rotationseinrichtung 80 auf zum Rotieren des Probenhalterkörpers 11 mit der darin in einer bestimmten Orientierung aufgenommenen Probe 60 um eine Drehachse 81, die auch als Rotationsachse bezeichnet wird.

Bei der Ausführungsform gemäß Figur 1 ist die Dreh- oder Rotationsachse 81 des Probenhalters 10 an einer Basis 82 mit einer Antriebseinrichtung 83 zum gesteuerten Rotieren der Drehachse 81 angebracht. Über eine Steuer- und Erfassungsleitung 53 ist der Probenhalter 10 mit seiner Rotationseinrichtung 80 mit einer Steuereinheit 50 verbunden. Durch diese Maßnahmen können die Position und/oder die Orientierung des Probenhalters 10 und mithin der darin aufgenommenen Probe 60 in Bezug auf den Strahlengang 26 der Röntgen-CT-Vorrichtung 1 erfasst und über eine Ansteuerung der Rotationseinrichtung 80 angepasst werden.

Über weitere Steuer- und Erfassungsleitungen 51, 52, 54, 55 und 56 können Position und/oder Betrieb der Strahlungsquelle 20, der Gitterelemente 31, 32, 33 der Gitteranordnung 30 sowie der Detektoranordnung 40 erfasst und/oder gesteuert beeinflusst werden.

Bereits aus der Darstellung gemäß Figur 1 wird deutlich, dass sich im Rahmen eines Röntgen-CT-Verfahrens, insbesondere nach Art eines registrierungsbasierten Dunkelfeldtensortomographieverfahrens, durch die Verwendung des Probenhalters 11 dadurch Vorteile einstellen,
(A) dass die Probe 60 durch eine entsprechende Wahl der Befestigung im Innern 12 des Probenhalterhohlkörpers 11, nämlich über die Befestigungsmittel 71 an der Innenseite 11-1 des Probenhalterhohlkörpers 11, in einer Vielzahl wohldefinierter Orientierungen relativ zum Probenhalterkörper 11 über eine entsprechende Ansteuerung und Bewegung der Drehachse 81 unter Drehung im Strahlungsfeld im Strahlengang 26 abgetastet werden kann, wobei
(B) einerseits mit besonders einfachen Mitteln eine besonders zuverlässige gegenseitige Registrierung und/oder Ausrichtung der einzelnen erfassten Bilddatensätze möglich ist und
(C) andererseits durch die Ausgestaltung und Formgebung des Probenhalterkörper 11 sowie durch die Natur der Aufnahme der Probe 60 im Inneren 12 des Probenhalterhohlkörpers 11 eine besonders geringe Beeinflussung des Strahlungsfelds beim Einstrahlen auf die Probe 60 und beim Verlassen der Probe 60 nach Wechselwirkung erfolgt.

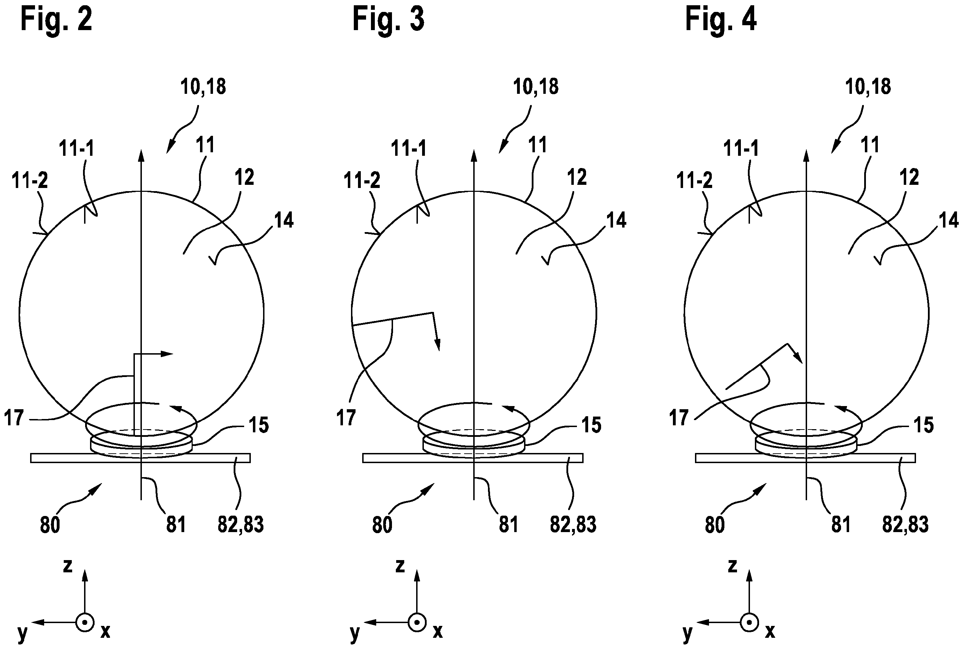

Die Figuren 2 bis 4 zeigen in verschiedenen Orientierungen eine andere Ausführungsform des Probenhalters 10.

Der dort dargestellte Probenhalter 10 besteht wiederum aus einem Probenhalterkörper 11 nach Art einer Hohlkugel mit einer Außenseite 11-2 und einer Innenseite 11-1. Des Weiteren weist dieser Probenhalter 10 eine Rotationseinrichtung 80 mit einer Drehachse 81 und einem Antrieb 83 in oder an einer Basis 82 auf.

Die Drehachse 81 ist parallel zur z-Richtung orientiert. Die Basis 82 liegt im Wesentlichen in der xy-Ebene.

Die unterschiedlichen Orientierungen des Probenhalterhohlkörpers 11 im Raum werden ersichtlich durch die an der Oberfläche des Probenhalterhohlkörpers 11 eingebrachte Orientierungsmarke 17. Mit der jeweils vorgegebenen Orientierung der Marke 17, welche zum Beispiel einer Orientierung einer im Innern 12 des Probenhalterkörper 11 aufzunehmenden Probe 60 entsprechen kann, kann eine Rotation um die Drehachse 81 erfolgen, z.B. durch gesteuerten Antrieb der Antriebseinrichtung 83.

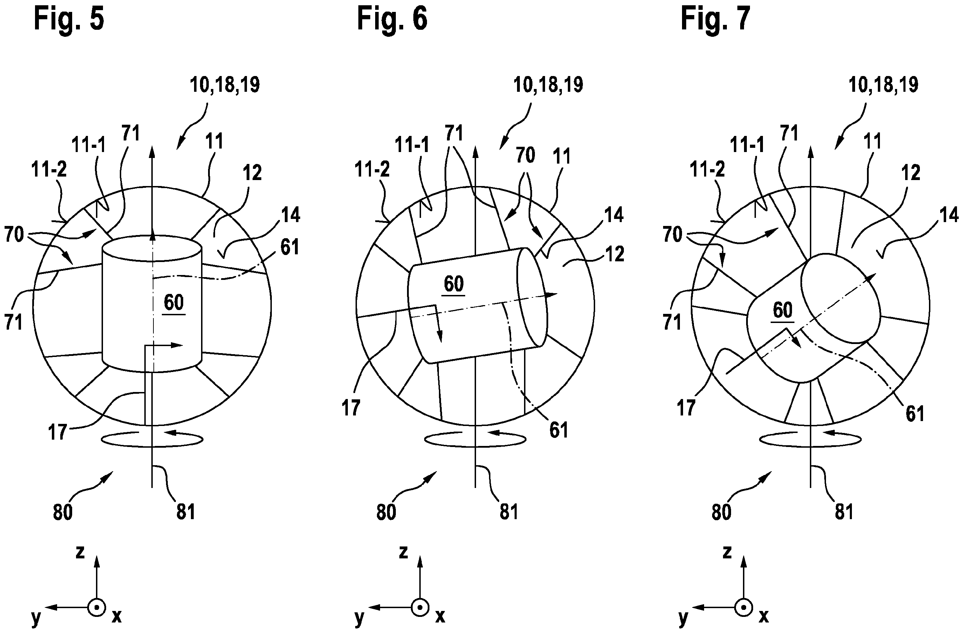

Die Figuren 5 bis 7 zeigen eine andere Ausführungsform des Probenhalters 10.

Dabei ist im Innern 12 des Probenhalterkörpers 11 ein Objekt in zylindrischer Form als Probe 60 eingebracht und über Befestigungsmittel 71 einer Befestigungsanordnung 70 an der Innenseite 11-1 des Probenhalterkörpers 11 befestigt.

Die Figuren 5 bis 7 zeigen dabei durch die Orientierungsmarken 17 die Orientierung der Probe 60 mit ihrer Symmetrieachse 61 relativ zum äußeren Bezugssystem der Vorrichtung 1, gegeben durch die Ausrichtung des Dreibeins xyz.

Gemäß den Darstellungen der Figuren 5 bis 7 kann es sich beim Probenhalterkörper 11 wieder um einen Hohlkörper 18 in Hohlkugelform handeln.

Alternativ dazu kann der Probenhalterkörper 11 in der Darstellung der Figuren 5 bis 7 auch als Rahmenstruktur 19, zum Beispiel in Form eines ringförmigen oder kreisförmigen Rahmens aufgefasst werden.

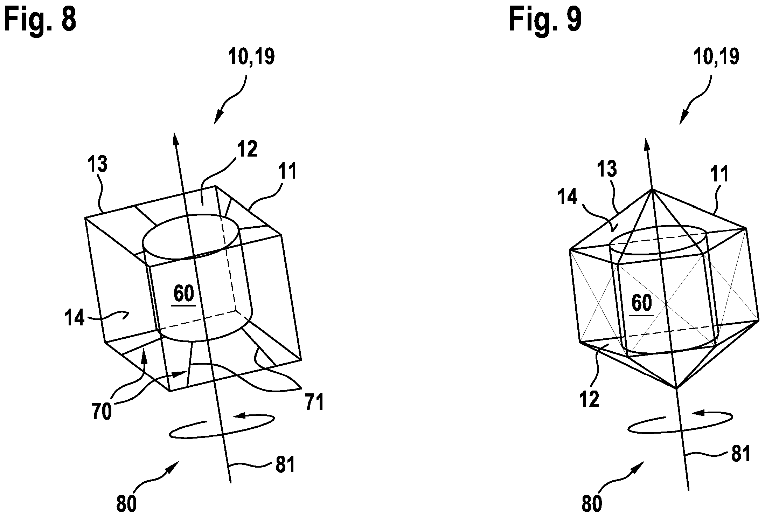

Die Figuren 8 bis 11 zeigen andere Ausführungsformen des Probenhalters 10, die sich im Hinblick auf die Ausgestaltung der Probenhalterkörper 11 unterscheiden.

Die Probenhalterkörper 11 der Ausführungsformen der Figuren 8 bis 11 werden gebildet von einem Würfel, einem Ikosaeder, einer Näherungsform einer Kugel bzw. von einem Kuboktaeder.

Sämtliche Modelle können aufgefasst werden als Hohlkörper 18 mit Kantenelementen 13 und Flächenelementen 14 oder als reine Rahmenstruktur 19, ausschließlich gebildet von Kantenelementen 13. Mischformen sind denkbar.

Neben der vorstehenden schriftlichen Beschreibung der Erfindung wird zu deren ergänzender Offenbarung hiermit explizit auf die zeichnerische Darstellung der Erfindung in den Figuren 1 bis 11 Bezug genommen.

Die vorliegende Erfindung betrifft vorzugsweise die so genannte registrierungsbasierte Dunkelfeldtensortomographie als Verfahren, wobei zur Ausführung eine zur Ausführung entsprechend eingerichtete Vorrichtung 1 verwendbar ist, die insbesondere auch als ein Röntgen-CT-System 1 aufgefasst werden kann.

Dabei wird insbesondere auf ein Verfahren zur orientierungsempfindlichen Röntgendunkelfeldtomographie abgestellt, welches auch als Röntgentensortomographie (X-ray tensor tomography: XTT) bezeichnet wird. Vorrichtungsseitig wird bei derartigen Verfahren ein so genanntes Horizontalgitterinterferometer (horizontal grating interferometry) verwendet, welches mit einem entsprechenden Konzept eines Probenhalters 10 ausgebildet ist.

Ein Hauptvorteil bei dem erfindungsgemäßen Vorgehen besteht darin, dass eine Datenerfassung und eine nachfolgende Verarbeitung mit gut etablierten Verfahren durchgeführt werden können. Durch Beschränken des aufgezeichneten Dunkelfeldstreusignals im Hinblick auf eine Orientierung parallel zu zu Grunde liegenden Rotationsachsen können mehrfache Dunkelfeld-CT-Abtastungen miteinander kombiniert werden, um die voxelweise dreidimensionale Streuverteilung zu charakterisieren.

Das Verfahren kann unter Anwendung von Standardrekonstruktionsverfahren und Bildverarbeitungstechniken ausgeführt werden. Das erfindungsgemäße Verfahren kann bei sämtlichen Abbildungssystemen eingesetzt werden, welche aus einer Röntgenquelle, drei Gittern, einer Probenhalterbühne und einen Detektor bestehen. Zur Durchführung des Abtastens oder Scannens der Probe mittels Röntgenstrahlung muss die Probe im Strahlungsfeld um eine feste Drehachse rotiert werden. Dies kann durch Drehung des Probenhalters als solchen oder durch Drehung des Probenhalters auf einer drehbaren Probenhalterbühne erfolgen.

Dies schafft eine effiziente Möglichkeit, industrielle Röntgen-CT-Anlagen im Einsatz zu erweitern und das XTT-Verfahren sehr breit einzusetzen.

Gitterbasierte Röntgenphasenkontrastabbildungsverfahren (grating based X-ray phase contrast imaging: GBI) stellen interferometrische Techniken dar. Den herkömmlichen Abschwächungsabbildungen am nächsten kommend schaffen diese Techniken zwei zusätzliche Kontrastmodalitäten, die gemeinsam erfasst und erreicht werden. Diese bestehen im Differenzialphasenkontrast und im Dunkelfeldkontrast. Die weitverbreitet verwendete Röntgenabschwächungsabbildung basiert dagegen im Wesentlichen nur auf der Intensitätsverminderung von Röntgenstrahlen beim Durchtritt durch eine Probe.

Der zusätzliche Dunkelfeldkontrast kann als Röntgenstreuinformation interpretiert werden. Diese resultiert hauptsächlich aus Strukturen auf einer Längenskala weit unterhalb der räumlichen Auflösung des eigentlichen Abbildungssystems. Wegen der Fähigkeit der Kombination von Streuinformation mit der räumlichen Auflösung in einem einzelnen Abbild ist die Dunkelfeldabbildung von besonderem Interesse bei der Untersuchung mikroskopischer Änderungen bei großen Objekten.

Wie herkömmliche Röntgenabbildungen, so sind auch gitterbasierte Röntgenphasenkontrastabbildungsverfahren nicht auf das Gebiet der Radiographie beschränkt. Vielmehr können Computertomographieverfahren (CT) sowohl im Zusammenhang mit Phasenkontrastsignalen als auch im Zusammenhang mit Dunkelfeldsignalen verwendet werden.

Ein Gitterinterferometer zur Verwendung bei Röntgenphasenkontrastabbildungsverfahren kann aus Gitterstrukturen mit einer wohldefinierten Orientierung aufgebaut werden. Dies führt dazu, dass ein derartiges Gitterinterferometer nur in Bezug auf Phasengradienten und Streuinformation empfindlich ist, welche im Zusammenhang stehen mit einer Richtung senkrecht zu den Gitterlinien des zu Grunde liegenden Gitters. Die an sich anisotrope Empfindlichkeit eines Gitterinterferometers kann verwendet werden, um das anisotrope Dunkelfeldsignal zu charakterisieren, welches den mikroskopischen Streustrukturen entspringt.

Dies ist in zweidimensionaler und in dreidimensionaler Art und Weise möglich.

Für den dreidimensionalen Fall kann eine vollständige Rekonstruktion der anisotropen Streuverteilung nur unter Verwendung komplexer Rekonstruktionsverfahren erreicht werden. Da die dreidimensionale Streuverteilung für jedes Voxel rekonstruiert wird, wird eine orientierte Dunkelfeldtomographie in diesem Zusammenhang auch als Röntgentensortomographie bezeichnet.

Die Möglichkeit, strukturelle Information auf einer Skala zu untersuchen, die mehrere Größenordnungen kleiner ist als die Skala des untersuchten Objekts, ist einzigartig für die Dunkelfeldabbildung.

Mögliche Anwendungen umfassen zum Beispiel die Charakterisierung faserverstärkter Materialien, zum Beispiel von glasfaserverstärkten Polymeren oder von Kohlenstoffverbundmaterialien.

Figur 1 zeigt den erfindungsgemäß verwendbaren CT-Aufbau im Sinne einer Röntgen-CT-Vorrichtung 1 zur Durchführung des erfindungsgemäßen Dunkelfeldtensortomographieverfahrens mit drei horizontal und zueinander ausgerichteten Gittern 31, 32, 33 der zu Grunde liegenden Gitteranordnung 30 sowie dem entsprechend zur Verwendung ausgestalteten Probenhalter 10 als Kernbestandteilen.

Dieser für das erfindungsgemäße Verfahren ausgestalteten Anordnung liegt im Wesentlichen ein so genanntes Talbot-Lau-Röntgengitterinterferometer zu Grunde. Die erzeugten Dunkelfeldsignale stehen in engem Zusammenhang mit der Kleinwinkelröntgenstreuung (small-angle X-ray scattering: SAXS). Diese wird üblicherweise im reziproken Raum beschrieben und untersucht.

Um eine korrekte auf Streuung basierte Tomographie zu gewährleisten, muss das aufgezeichnete Signal invariant sein unter Rotation der zu untersuchenden Probe 60. Es kann gezeigt werden, dass Streuung parallel zur Rotationsachse 81 der Probe 60 immer als rotationsinvariant aufgefasst werden kann.

Die für die Aufzeichnung der Dunkelfeldsignale verwendeten Gitter 31, 32, 33 ermöglichen eine Beschränkung der Streuung auf die Richtung senkrecht zu den Gitterlinien der Gitterelemente 31, 32, 33. Aus diesen Zusammenhängen ergibt sich, dass für eine Aufzeichnung rotationsinvarianter Streukomponenten, d.h. also von Streukomponenten parallel zur Rotationsachse 81, die Gitterlinien oder -stäbe senkrecht ausgerichtet werden müssen zur Rotationsachse 81 der Probe 60.

Da bei nicht medizinischen Anwendungen die Rotationsachse 81 gewöhnlich vertikal, also parallel zur z-Richtung ausgerichtet ist, so auch in der Darstellung der Figur 1, so ergibt sich eine Ausrichtung der Gitteranordnung 30 mit den Gitterlinien der Gitterelemente 31, 32, 33 in horizontaler Richtung, hier also parallel zur y-Richtung.

Mit der horizontalen Gitterorientierung kann die Streuorientierung parallel zur Rotationsachse 81 korrekt erfasst und rekonstruiert werden. Ein vollständiges Bild der voxelweisen und dreidimensionalen Streuverteilung kann nur erhalten werden unter der Verwendung von mehrfachen oder multiplen Rotationsachsen und daher aus Messdatenerfassungen zu multiplen oder mehrfachen Streuorientierungen. Dies erfolgt in ähnlicher Art und Weise wie bei der Röntgentensortomographie, bei welcher verschiedene Streukomponenten simultan rekonstruiert werden aus Projektionen, die aufgezeichnet wurden unter verschiedenen Rotationsachsen.

Es ist schwierig, Abbilder aus allen Richtungen aufzuzeichnen, ohne dass Teile der Probe 60 während der Abbildung verdeckt werden durch den Probenhalter und dadurch für bestimmte Projektionen im Zugriff entzogen sind. Dies ist jedoch für eine Rekonstruktion mehrerer und/oder unterschiedlicher Streukomponenten unerlässlich und von maßgeblicher Bedeutung.

An dieser Problematik setzt die vorliegende Erfindung dem Kern nach an und präsentiert eine Lösung.

Ein Kernaspekt der erfindungsgemäßen Lösung besteht dabei darin, der Vorrichtung 1 zur Durchführung eines Verfahrens zur registrierungsbasierten Dunkelfeldtensortomographie und somit dem Verfahren zur registrierungsbasierten Dunkelfeldtensortomographie selbst einen Probenhalter 10 und dessen Verwendung zu Grunde zu legen, welcher auf dem Grundprinzip fußt, die zu vermessende Probe 60 in einem dem Halter zu Grunde liegenden Probenhalterkörper 11 - z.B. einem Hohlkörper 18 oder einer Rahmenstruktur 19 - fixiert anzuordnen und dann den dem Probenhalter 10 zu Grunde liegenden Hohlkörper 18 oder die Rahmenstruktur 19 an der eigentlichen Rotationsachse 81 anzubringen und entsprechend dem Verfahren zur registrierungsbasierten Dunkelfeldtensortomographie zu rotieren.

Dabei sind der dem Probenhalter 10 zu Grunde liegende Hohlkörper 18 oder die Rahmenstruktur 19 und Befestigungsmittel 71 der Probe 60 am Inneren 12 des Hohlkörpers 11 z.B. transparent oder im Wesentlichen transparent für die verwendete Röntgenstrahlung.

Bei dem dem Probenhalter 10 zu Grunde liegenden Hohlkörper 18 kann es sich um eine Hohlsphäre, einen Ring, eine Kombination aus mehreren Ringen, einen Würfel, einen Quader, oder um eine beliebige andere Hohlform im Sinne eines Polyeders handeln, zum Beispiel auch um Kuboktaeder. Diese Körper können mit materiell flächigen Komponenten oder als Drahtmodelle, Gittermodelle oder Rahmenmodelle mit für die verwendete Strahlung transparenten oder im Wesentlichen transparenten Materialien ausgebildet sein.

Der dem Probenhalter 10 zu Grunde liegende Probenhalterkörper 11 kann auf diese Weise an der Rotationsachse 81, insbesondere an der Spitze einer die Achse 81 definierenden Welle, frei positioniert und befestigt werden.

Absorptionsbilder der Probe 60 im Inneren des Hohlkörpers 18 oder der Rahmenstruktur 19 des Probenhalters 10 - die im Folgenden auch Probenhalterhohlkörper 11 genannt werden - sind im Zusammenhang mit den Figuren 2 bis 4 dargestellt, um die strukturelle Grundidee der vorliegenden Erfindung zu illustrieren, wobei das Pfeilsymbol 17 verschiedene Orientierungen des Probenhalterhohlkörpers 11 in Bezug auf die Rotationsachse 81 parallel zur z-Richtung vermittelt.

Die tomographische Rotationsachse 81 parallel zur z-Richtung ist für alle drei Orientierungen des Probenhalterhohlkörpers 11 in den Figuren 2 bis 4, die dort durch das Pfeilsymbol als Orientierungsmarke 17 am Probenhalterhohlkörper 11 angedeutet sind, identisch. Der dort sphärisch dargestellte Probenhalterhohlkörper 11 erlaubt die Positionierung einer beliebigen Achse durch die zu untersuchende Probe 60 parallel zur Rotationsachse 81 und somit eine Untersuchung dieser dadurch bestimmten Streuorientierung.

Dabei ist es nicht von besonderer Bedeutung, exakt zueinander orthogonale Richtungen zu vermessen. Ein nachfolgender Registrierungsschritt, zum Beispiel im Sinne einer bildverarbeitungstechnischen Registrierung der erfassten Bilddaten, unter Verwendung der simultan erfassten Absorptionsdaten wird zur Ausrichtung der verschieden aufgezeichneten Probenvolumina verwendet. Da die individuellen Absorptions- und Dunkelfeldvolumina intrinsisch perfekt registriert oder registrierbar sind, können verschiedene Dunkelfeldvolumina auf diese Art und Weise miteinander kombiniert werden, um eine voxelweise dreidimensionale Streuverteilung äquivalent zu einer XTT-Verteilung zu erhalten.

Der vorgeschlagene erfindungsgemäß verwendbare Aufbau der Röntgen-CT-Vorrichtung 1 zum Durchführen einer registrierungsbasierten Dunkelfeldtensortomographie und das entsprechende Verfahren bieten vielfältige Anwendungsmöglichkeiten, gerade auch im industriellen Bereich.

Das industrielle CT-Abtasten oder CT-Scannen kann breit eingesetzt werden im Bereich des zerstörungsfreien Untersuchens.

Die vorliegende Erfindung kann dabei auch direkt an bereits bestehenden Gitterinterferometer-CT-Anlagen eingesetzt werden oder in Kombination mit einem Gitterinterferometer zur Aufrüstung eines herkömmlichen CT-Scanners.

Der erfindungsgemäß verwendbare Probenhalter kann in einfacher Art und Weise hergestellt werden, und zwar in jeder gewünschten Größe. Eine einfache und geradlinige Implementation und die Möglichkeit des Aufrüstens bestehender Anlagen ohne die Notwendigkeit des Einsatzes hochspezialisierter Hard- oder Software macht das beschriebene Verfahren einem breiteren Anwendungsgebiet zugänglich.

Daher kann das erfindungsgemäße Konzept im Bereich der Industriegütercharakterisierung und der Qualitätskontrolle zu deutlichen Verbesserungen führen.

Die nachfolgenden Erläuterungen beschreiben die vorangehend erwähnten zusätzlichen Eigenschaften der vorliegenden Erfindung im Detail:
- Ein korrektes Tomographieergebnis unter Verwendung herkömmlicher Einrichtungen und Verfahren ist nur möglich aus einem Streuprozess parallel zu einer zu Grunde gelegten Rotationsachse der Probe.
- Daraus folgt, dass in einem Gitteraufbau 30 die Gitterlinien senkrecht positioniert sein sollten zur zu Grunde gelegten Rotationsachse 81 der Probe 60. Dies ermöglicht die Untersuchung einer Streurichtung mittels eines Tomographiescans.

Im Folgenden wird ein möglicher Ablauf eines Arbeitsverfahrens beispielhaft dargestellt:
(1) Unter Verwendung horizontal ausgerichteter Gitter 31, 32, 33 einer Gitteranordnung 30 kann eine Streurichtung parallel zu einer zu Grunde gelegten Rotationsachse 16 einer Probe 60 durch einen Computertomographiescan untersucht werden.
(2) Das Positionieren der Probe 60 erfolgt innerhalb eines Probenhalterhohlkörpers 11, zum Beispiel nach Art eines sphärischen Hohlkörpers 18 oder einer Hohlsphäre, wobei der Probenhalterhohlkörper 11 an der zu Grunde gelegten Rotationsachse 16 angebracht wird. Dies ermöglicht wiederholte und mehrfache Computertomographiescans mit untersuchten Streuprozessen jeweils entlang einer unterschiedlichen Achse in Bezug auf das Bezugssystem der Probe 60.
(3) Die tatsächlich untersuchte Streuorientierung ist dabei nicht relevant, solange eine ausreichende Anzahl von Orientierungen untersucht wird, zum Beispiel drei - vorzugsweise zueinander senkrechten oder im Wesentlichen zueinander senkrechten - Orientierungen oder mehr als drei Orientierungen, bei denen die senkrechte Ausrichtung zueinander nicht mehr zwingend erforderlich ist.
(4) Jeder individuelle Computertomographiescan kann unabhängig von sämtlichen anderen Scans ausgeführt werden.
(5) Die Rekonstruktion kann ausgeführt werden durch Algorithmen der gefilterten Rückprojektion (filtered back-projection). Dabei ist es nur wesentlich, den dreidimensionalen Datensatz für jeden der Scans zu erhalten.
(6) Jedes der auf diese Weise erhaltenen CT-Volumina korrespondiert zu einer anderen Streuorientierung. Aufgrund der Probenrotation überlappen diese nicht und es ist ein nachfolgender Verarbeitungsschritt für die Registrierung der Datensätze notwendig, um eine gegenseitige Ausrichtung und/oder Überlagerung zu erhalten.
(7) Auf Grund der Natur der Gitterinterferometrie kann sich eine Röntgenabsorptionstomographie gemäß den Datensätzen ergeben, die parallel zu den Datensätzen für die Streuung erfasst und gemessen werden können. Jedes Paar von Streu- und Absorptions-CT-Datensätzen ist intrinsisch perfekt zueinander registriert oder ausgerichtet.
(8) Schließlich ist eine Nachverarbeitung notwendig, um einer Rotationsfehlanpassung zwischen den individuellen Volumina Rechnung zu tragen. Aus den Umständen des Abschnitts (7) ist bekannt, dass die Abschwächungsdaten (attenuation data) bereits vorliegen. Abschwächung ist ein isotroper Vorgang. Das bedeutet, dass sämtliche Abschwächungsvolumina - bis auf Rotation - übereinstimmen. Die Rotationen sind identisch mit denjenigen der Streuvolumina. Jedoch ändern sich die Streuvolumina mit der Rotation, die Abschwächungsdaten bleiben jedoch unter Rotation erhalten.
(9) Auf Grund der in Abschnitt (8) dargestellten Umstände können sämtliche Vorgehensweisen zum Registrieren von Volumendatensätzen herangezogen werden, wobei die Abschwächungsdatensätze verwendet werden, um die Rotationsverschiebungen (rotational shift) zu berechnen und diese Verschiebungen auf die Streudatensätze anzuwenden.
(10) Die Registrierung kann wie folgt ausgeführt werden: Sämtliche N abschwächungsbasierten Volumina und N streubasierten Volumina werden geladen. Das erste Volumen erfordert keine zusätzliche Behandlung. Dieses wird zum Beispiel definiert im Zusammenhang mit einer Streuung in der z-Richtung. Daraus ergeben sich eine Rotation und eine Translation, die für eine perfekte Ausrichtung oder Übereinstimmung notwendig sind. Die Rotation und die Translation können auch oder zusätzlich aus Registrierungen zu Absorptionsdaten gewonnen und dann auf die Dunkelfelddaten angewandt werden. Rotation und Translation werden in zweierlei Hinsicht verwendet: Zunächst wird das Streuvolumen rotiert und translatiert oder verschoben, so dass es räumlich mit dem ersten Streuvolumen übereinstimmt. Des Weiteren wird die Streurichtung des erfassten Streuvolumens aufgefasst als eine Richtung entlang der z-Richtung vor der Rotation. Dieselbe Rotation - angewandt auf den z-Vektor - liefert die Orientierung der Streuung, die in Bezug auf das zweite Volumen erfasst wurde, und zwar im Bezugssystem der ersten Volumina. Dieser Vorgang wird für sämtliche N Volumina wiederholt.
(11) Sobald dieser Vorgang abgeschlossen ist, liegen perfekt miteinander registrierte und ausgerichtete Streuvolumina vor. Bekannt ist dabei auch die exakte Richtung der erfassten Streusignale durch jedes Volumen. Diese Volumina können miteinander verschmolzen oder verbunden werden, um einen gemeinsamen Datensatz zu bilden, wobei jedes Voxel nicht nur einen Wert aufweist, zum Beispiel einen Wert der Abschwächung, sondern mehrfache Werte. Jeder der Werte korrespondiert zur einer der erfassten Achsen aus dem Abschnitt (2).

Auf Grund des erfindungsgemäßen Vorgehens ergeben sich gegenüber herkömmlichen Verfahren unter anderem folgende Vorteile:
(A) Herkömmliche Anordnungen, die Rotationen mit mehrfachen Achsen und eine exakte Probenpositionierung erlauben, sind sperrig und kostenintensiv. Im Gegensatz dazu ist erfindungsgemäß nur eine geringe zusätzliche Probenvorbereitung notwendig. Diese besteht lediglich darin, die Probe 60 innerhalb des zu Grunde liegenden Probenhalterhohlkörpers 11 einzubringen und dort zu befestigen. Dadurch ergibt sich eine einfache Möglichkeit der Orientierung zwischen individuellen Abtastvorgängen oder Scans innerhalb des erfindungsgemäßen registrierungsbasierten Dunkelfeldtensortomographieverfahrens.
(B) Eine direkte Rekonstruktion der Streuorientierungen in einer Probe 60 ist bisher nur mit hochspezialisierten iterativen Rekonstruktionsverfahren möglich. Erfindungsgemäß wird dies durch einen Übergang zu mehreren individuellen Rekonstruktionen ersetzt, wobei jede individuelle Rekonstruktion ausgeführt werden kann unter Verwendung besonders einfacher und wohlverstandener Vorgehensweisen und Algorithmen, zum Beispiel der so genannten gefilterten Rückprojektion (filtered back projection). Keine zusätzlichen Entwicklungen sind für eine tatsächliche Rekonstruktion notwendig.
(C) Für die Volumenregistrierung können verschiedene Vorgehensweisen verwendet werden. Der einzige zusätzliche Aufwand besteht im Transfer oder der Übertragung der Rohkonstruktionsergebnisse an die Volumenregistrierungsverfahren, zum Beispiel die entsprechenden Softwarekomponenten. Dies ermöglicht auch eine automatische Handhabung des Registrierungsschritts.
(D) Insgesamt ergeben sich als Vorteile
   (i) ein marginaler zusätzlicher Aufwand bei der Probenpräparation,
   (ii) die Verwendung einfachster erhältlicher Rekonstruktionsverfahren,
   (iii) die Möglichkeit der Verwendung verbreiteter Registrierungsverfahren und - Software.

   Im Gegensatz dazu erfordert das herkömmliche Vorgehen, also ohne Verwendung des erfindungsgemäß verwendbaren Probenhalters 10, den Einsatz kostenintensiver Maßnahmen zum hoch genauen Positionieren der Probe und spezieller Rekonstruktionssoftware.

### Bezugszeichenliste

- 1: Vorrichtung, Röntgen-CT-Vorrichtung

- 10: Halter, Probenhalter, Objekthalter
- 11: Probenhalterhohlkörper, Probenhalterkörper
- 11-1: Innenseite, Innenfläche
- 11-2: Außenseite, Außenfläche
- 12: Inneres des Probenhalterkörpers 11
- 13: Kantenelement, Kantenbereich
- 14: Flächenelement, Flächenbereich
- 15: Auflage
- 17: Orientierungsmarke
- 18: Hohlkörper
- 19: Rahmenstruktur

- 20: Strahlungsquelle, Röntgenquelle
- 21: Strahlung
- 22: Strahlung
- 23: Strahlung
- 24: Strahlung
- 25: Strahlung
- 26: Strahlengang

- 30: Gitteranordnung
- 31: Gitterelement, Gitter
- 32: Gitterelement, Gitter
- 33: Gitterelement, Gitter

- 40: Detektoranordnung

- 50: Steuereinheit
- 51: Erfassungs- und Steuerleitung
- 52: Erfassungs- und Steuerleitung
- 53: Erfassungs- und Steuerleitung
- 54: Erfassungs- und Steuerleitung
- 55: Erfassungs- und Steuerleitung
- 56: Erfassungs- und Steuerleitung
- 57: Bus

- 60: Untersuchungsobjekt, Probe
- 61: Probenachse, Symmetrieachse

- 70: Befestigungsanordnung
- 71: Befestigungsmittel

- 80: Rotationseinrichtung
- 81: Rotationsachse/Drehachse der Rotationseinrichtung 80/des Probenhalters 10
- 82: Basis
- 83: Antriebseinrichtung

- x: Raumrichtung
- y: Raumrichtung
- z: Raumrichtung

## Patentansprüche

1. Röntgen-CT-Verfahren und insbesondere registrierungsbasiertes Dunkelfeldtensortomographieverfahren zum Untersuchen einer Probe (60) mittels Röntgenstrahlung, bei welchem
- eine Probe (60) aufeinanderfolgend bei mindestens zwei voneinander verschiedenen festen Orientierungen unter Rotation um eine jeweils feste Rotationsachse mittels Röntgenstrahlung abgetastet wird,
- bei jeder Orientierung der Probe (60) auf der Grundlage von Dunkelfeldsignalen eine Mehrzahl von Streudatensätzen erfasst werden,
- die Streudatensätze zu verschiedenen Orientierungen durch Registrierung miteinander zur Deckung gebracht und zu einem eine gegebenenfalls vorliegende Winkelabhängigkeit der Streuung durch die Probe (60) widerspiegelnden gemeinsamen Streudatensatz vereinigt werden und
- eine jeweilige Rotationsachse (81) zu einer Orientierung der Probe (60) senkrecht oder im Wesentlichen senkrecht ausgerichtet ist zu gleichorientierten ersten, zweiten und dritten Gitterelementen (31, 32, 33) einer Gitteranordnung (30) zwischen einer Strahlungsquelle (20) und einer Detektoranordnung (40) im Strahlengang (26) einer verwendeten gitterbasierten Interferometeranordnung einer zu Grunde liegenden Röntgen-CT-Vorrichtung (1).

2. Verfahren nach Anspruch 1, bei welchem eine jeweilige Orientierung der Probe (60) definiert wird durch eine Orientierung einer jeweils festen Rotationsachse (81) der Probe (60).

3. Verfahren nach Anspruch 1 oder 2, bei welchem zur Erzeugung von Streudatensätzen die Probe (60) für mindestens drei unterschiedliche Orientierungen der Rotationsachse (81) abgetastet wird, wobei die drei Orientierungen der Rotationsachse (81) insbesondere paarweise senkrecht oder im Wesentlichen senkrecht zueinander stehen, insbesondere mit einem jeweils eingeschlossenen Winkel von mindestens 70°, vorzugsweise von mindestens 80°, weiter bevorzugt von mindestens 85°.

4. Verfahren nach einem der vorangehenden Ansprüche, bei welchem zur Erzeugung von Streudatensätzen die Probe (60) für vier unterschiedliche Orientierungen der Rotationsachse (81) abgetastet wird.

5. Verfahren nach einem der vorangehenden Ansprüche, bei welchem zum Haltern und zum Einstellen der Orientierung und insbesondere einer jeweiligen Rotationsachse (81) der Probe (60) ein Probenhalter (10) verwendet wird, welcher einen Probenhalterkörper (11) aufweist, der ausgebildet ist, in seinem Inneren (12) die Probe (60) mittelbar oder unmittelbar an einer Innenseite (11-1) des Probenhalterhohlkörpers (11) - insbesondere lösbar - drehfest mit dem Probenhalterkörper (11) verbunden oder verbindbar aufzunehmen.

6. Verfahren nach Anspruch 5, bei welchem ein Probenhalter (10) mit einem Probenhalterkörper (11) verwendet wird, welcher teilweise oder vollständig als Hohlkörper (11-1) ausgebildet ist, insbesondere mit den Probenhalterkörper (11) bildenden Kantenelementen (13) und/oder Flächenelementen (14).

7. Verfahren nach Anspruch 5 oder 6, bei welchem ein Probenhalter (10) mit einem Probenhalterkörper (11) verwendet wir, welcher teilweise oder vollständig als Rahmenstruktur (11-2) ausgebildet, insbesondere mit den Probenhalterkörper (11) bildenden Kantenelementen (13).

8. Verfahren nach einem der Ansprüche 5 bis 7, bei welchem ein Probenhalter (10) mit einem Probenhalterkörper (11) verwendet wird, welcher eine Form aus der Gruppe von Formen aufweist, die gebildet wird von der Form einer Hohlkugel, eines Hohlellipsoids, eines Archimedischen Körpers und insbesondere eines Würfels, eines Quaders, eines Ikosaeders, eines Kuboktaeders, insbesondere nach Art eines Kanten- oder Gittermodells.

9. Verfahren nach einem der Ansprüche 5 bis 8, bei welchem ein Probenhalter (10) mit einem Probenhalterkörper (11) verwendet wird, welcher eine Befestigungsanordnung (70) aufweist, vorzugsweise in seinem Inneren (12), zur - insbesondere lösbaren - Befestigung einer zu untersuchenden Probe (60) an einer Innenseite (11-1) des Probenhalterhohlkörpers (11), vorzugsweise mit einem oder mehreren Befestigungsmitteln (71) in Form von Faden- oder Stabsstrukturen und/oder von Klebestellen.

10. Verfahren nach einem der Ansprüche 6 bis 9, sofern rückbezogen auf mindestens einen der Ansprüche 6 oder 7, bei welchem ein Probenhalter (10) mit einem Probenhalterkörper (11) verwendet wird, bei welchem ein jeweiliges Kantenelement (13) und/oder ein jeweiliges Flächenelement (14) von einem Material gebildet wird, welches für eine zu verwendende Röntgenstrahlung gleichförmige optische Eigenschaften aufweist, insbesondere gleichförmig transparent ist.

11. Verfahren nach einem der Ansprüche 5 bis 10, bei welchem ein Probenhalter (10) verwendet wird, welcher mit einer Rotationseinrichtung (80) mit einer - insbesondere steuerbar - antreibbaren Drehachse (81) ausgebildet ist, an oder mit welcher der Probenhalterkörper (11) drehfest gekoppelt oder koppelbar ist.

12. Verfahren nach einem der vorangehenden Ansprüche, bei welchem eine Röntgen-CT-Vorrichtung (1) verwendet wird,
- welche als gitterbasierte Interferometeranordnung und mit einer steuerbaren Strahlungsquelle (20) zum Erzeugen und Aussenden primärer Röntgenstrahlung (21) und einer Detektoranordnung (40) in räumlichem Abstand zur Strahlungsquelle (20) zum Detektieren über einen Strahlengang (26) durch die Strahlungsquelle (20) ausgesandter Röntgenstrahlung (25) ausgebildet ist,
- wobei zwischen der Strahlungsquelle (20) und der Detektoranordnung (40) eine Gitteranordnung (30) mit im Strahlengang (26) zueinander ausgerichteten ersten, zweiten und dritten Gitterelementen (31, 32, 33) und
- wobei zwischen einem ersten strahlungsquellenseitigen Gitterelement (31) und einem zweiten detektorseitigen Gitterelement (32) im Strahlengang (26) der Probenhalter (10) angeordnet ist.

## Claims

1. An X-ray CT method and especially a registration-based dark-field tensor tomography method for examining a sample (60) using X-rays, in which method
- a sample (60) is successively scanned using X-rays at least two mutually different fixed orientations while being rotated about a respective fixed rotational axis,
- at each orientation of the sample (60), a plurality of scattering data sets are acquired based on dark field signals,
- the scattering data sets for different orientations are brought into coincidence to each other by registration and are combined into a common scattering data set reflecting any angular dependence of the scattering by the sample (60), and
- a respective rotational axis (81), in relation to an orientation of the sample, is aligned (60) perpendicularly or substantially perpendicularly to equally oriented first, second and third grating elements (31, 32, 33) of a grating arrangement (30) between a radiation source (20) and a detector arrangement (40) in the beam path (26) of an employed grating-based interferometer arrangement of an underlying X-ray CT device (1).

2. The method according to claim 1, wherein a respective orientation of the sample (60) is defined by an orientation of a respective fixed rotational axis (81) of the sample (60).

3. The method according to claims 1 or 2, wherein the sample (60) is scanned for at least three different orientations of the rotational axis (81) to generate scatter data sets, the three orientations of the rotational axis (81) being especially pairwise perpendicular or essentially perpendicular to each other, especially with a respective included angle of at least 70°, preferably of at least 80°, more preferably of at least 85°.

4. The method according to one of the preceding claims, wherein the sample (60) is scanned for four different orientations of the rotational axis (81) to generate scatter data sets.

5. The method according to one of the preceding claims, wherein for holding and setting orientation and especially a respective rotational axis (81) of the sample (60), a sample holder (10) is used which comprises a sample holder body (11) which is formed to receive the sample (60), in the interior (12) thereof, indirectly or directly on an inner side (11-1) of the sample holder hollow body (11) - especially releasably - in a manner fixedly connected or connectable to the sample holder body (11).

6. The method according to claim 5, wherein a sample holder (10) is used with a sample holder body (11) which is partially or completely formed as a hollow body (11-1), especially with edge elements (13) and/or surface elements (14) forming the sample holder body (11).

7. The method according to claim 5 or 6, wherein a sample holder (10) with a sample holder body (11) is used, which is partially or completely formed as a frame structure (11-2), especially with edge elements (13) forming the sample holder body (11).

8. The method according to one of the claims 5 to 7, wherein a sample holder (10) with a sample holder body (11) is used, which has a shape selected from the group of shapes comprising the shape of a hollow sphere, a hollow ellipsoid, an Archimedean body and especially a cube, a cuboid, an icosahedron, a cuboctahedron, especially in the manner of an edge model or lattice model.

9. The method according to one of the claims 5 to 8, wherein a sample holder (10) with a sample holder body (11) is used, which has a fastening arrangement (70), preferably in the interior (12) thereof, for - especially releasably - fastening a sample (60) to be examined to an inner side (11-1) of the sample holder hollow body (11), preferably using one or more fastening means (71) in the form of thread or rod structures and/or of adhesive points.

10. The method according to one of the claims 6 to 9, if dependent on at least one of claims 6 or 7, wherein a sample holder (10) with a sample holder body (11) is used, wherein a respective edge element (13) and/or a respective surface element (14) is formed by a material which has uniform optical properties for an X-ray to be used, and which especially is uniformly transparent.

11. The method according to one of the claims 5 to 10, wherein a sample holder (10) is used which is formed to comprise a rotational device (80) with a rotational axis (81) which can - especially controllably - be driven - and the sample holder body (11) is fixedly coupled or couplable thereto or therewith.

12. The method according to one of the preceding claims, wherein an X-ray CT device (1) is used,
- which is designed as a grating-based interferometer arrangement and is formed to comprise is a controllable radiation source (20) for generating and emitting primary X-ray radiation (21) and a detector arrangement (40) at a spatial distance from the radiation source (20) for detecting X-ray radiation (25) emitted via a beam path (26) through the radiation source (20),
- wherein a grid arrangement (30) with first, second and third grid elements (31, 32, 33) aligned with each other in the beam path (26) is arranged between the radiation source (20) and the detector arrangement (40); and
- wherein the sample holder (10) is arranged in the beam path (26) between a first grid element (31) on the radiation source side and a second grid element (32) on the detector side.

## Revendications

1. Procédé de tomographie par rayons X et en particulier procédé de tomographie en tenseur de diffusion en champ sombre basé sur la congruence pour examiner un échantillon (60) au moyen de rayons X, où
- un échantillon (60) est exploré au moyen de rayons X moyennant une rotation autour d'un axe de rotation respectivement fixe successivement selon au moins deux orientations fixes différentes l'une de l'autre,
- une multitude de jeux de données de diffusion sont détectés pour chaque orientation de l'échantillon (60) sur la base de signaux en champ sombre,
- les jeux de données de diffusion sont amenés en congruence pour s'aligner les uns avec les autres en différentes orientations et sont regroupés en un jeu de données de diffusion commun reproduisant une dépendance angulaire éventuellement présente de la diffusion à travers l'échantillon (60), et
- un axe de rotation (81) respectif est orienté de manière perpendiculaire ou de manière sensiblement perpendiculaire par rapport à une orientation de l'échantillon (60) par rapport à des premiers, deuxièmes et troisièmes éléments de maillage (31, 32, 33) de même orientation d'un ensemble de maillage (30) entre une source de rayonnement (20) et un ensemble de détecteur (40) sur le chemin optique (26) d'un ensemble interféromètre utilisé basé sur le maillage d'un dispositif de tomodensitométrie par rayons X (1) sous-jacent.

2. Procédé selon la revendication 1, où une orientation respective de l'échantillon (60) est définie par une orientation d'un axe de rotation (81) respectivement fixe de l'échantillon (60).

3. Procédé selon la revendication 1 ou 2, où pour générer des jeux de données de diffusion, l'échantillon (60) est exploré pour au moins trois orientations différentes de l'axe de rotation (81), dans lequel les trois orientations de l'axe de rotation (81) sont perpendiculaires en particulier par paire ou sont sensiblement perpendiculaires les uns par rapport aux autres, en particulier avec un angle respectivement formé d'au moins 70°, de préférence d'au moins 80°, de manière davantage préférée d'au moins 85°.

4. Procédé selon l'une quelconque des revendications précédentes, où pour générer des jeux de données de diffusion, l'échantillon (60) est exploré pour quatre différentes orientations de l'axe de rotation (81).

5. Procédé selon l'une quelconque des revendications précédentes, où pour maintenir et régler l'orientation et en particulier un axe de rotation (81) respectif de l'échantillon (60), un porte-échantillon (10) est utilisé, lequel présente un corps de porte-échantillon (11) qui est réalisé pour recevoir dans son intérieur (12) l'échantillon (60) indirectement ou directement sur un côté intérieur (11-1) du corps creux de porte-échantillon (11) - en particulier de manière amovible - tout en étant relié ou en pouvant être relié de manière solidaire en rotation au corps de porte-échantillon (11).

6. Procédé selon la revendication 5, où un porte-échantillon (10) est utilisé avec un corps de porte-échantillon (11), lequel est réalisé en partie ou en totalité en tant que corps creux (11-1), en particulier avec des éléments d'arête (13) et/ou des éléments de surface (14) formant le corps de porte-échantillon (11).

7. Procédé selon la revendication 5 ou 6, où un porte-échantillon (10) est utilisé avec un corps de porte-échantillon (11), lequel est réalisé en partie ou en totalité en tant que structure de cadre (11-2), en particulier avec des éléments d'arête (13) formant le corps de porte-échantillon (11).

8. Procédé selon l'une quelconque des revendications 5 à 7, où un porte-échantillon (10) est utilisé avec un corps de porte-échantillon (11), lequel présente une forme issue du groupe de formes, qui est formé par la forme d'une bille creuse, d'un ellipsoïde creux, d'un corps d'Archimède et en particulier d'un cube, d'un carré, d'un icosaèdre, d'un cuboctaèdre, en particulier à la manière d'un modèle d'arête ou de maillage.

9. Procédé selon l'une quelconque des revendications 5 à 8, où un porte-échantillon (10) est utilisé avec un corps de porte-échantillon (11), lequel présente un ensemble de fixation (70), de préférence dans son intérieur (12), pour fixer - en particulier de manière amovible - un échantillon (60) à examiner sur un côté intérieur (11-1) du corps creux de porte-échantillon (11), de préférence avec un ou plusieurs moyens de fixation (71) sous la forme de structures de fil ou de barre et/ou d'emplacements de collage.

10. Procédé selon l'une quelconque des revendications 6 à 9, dans la mesure où il se rapporte à au moins l'une quelconque des revendications 6 ou 7, où un porte-échantillon (10) est utilisé avec un corps de porte-échantillon (11), où un élément d'arête (13) respectif et/ou un élément de surface (14) respectif sont formés par un matériau, lequel présente des propriétés optiques uniformes pour des rayons X à utiliser, en particulier est transparent de manière uniforme.

11. Procédé selon l'une quelconque des revendications 5 à 10, où un porte-échantillon (10) est utilisé, lequel est réalisé avec un système de rotation (80) avec un axe de rotation (81) pouvant être entraîné - en particulier de manière commandable - sur ou avec lequel le corps de porte-échantillon (11) est couplé ou peut être couplé de manière solidaire en rotation.

12. Procédé selon l'une quelconque des revendications précédentes, où le dispositif de tomodensitométrie par rayons X (1) est utilisé,
- lequel est réalisé en tant qu'ensemble d'interféromètre basé sur un maillage et avec une source de rayonnement (20) pouvant être commandée pour générer et émettre des rayons X primaires (21) et un ensemble détecteur (40) à une distance spatiale par rapport à la source de rayonnement (20) pour détecter des rayons X (25) émis sur un chemin optique (26) par la source de rayonnement (20),
- dans lequel un ensemble formant maillage (30) avec des premiers, deuxièmes et troisièmes éléments de maillage (31, 32, 33) orientés les uns par rapport aux autres sur le chemin optique (26) est disposé entre la source de rayonnement (20) et l'ensemble détecteur (40), et
- dans lequel le porte-échantillon (10) est disposé entre un premier élément de maillage côté source de rayonnement (31) et un deuxième élément de maillage côté détecteur (32) sur le chemin optique (26) des porte-échantillons (10).
